# EUROPÄISCHE PATENTSCHRIFT

(11) **EP 1 065 048 B1**
(45) Veröffentlichungstag und Bekanntmachung des Hinweises auf die Patenterteilung: **04.08.2004**
(21) Anmeldenummer: 00109633.8
(22) Anmeldetag: 05.05.2000
(51) Int. Cl.: B32B 27/34, B32B 7/02, C08G 69/48, C08G 73/02, B32B 27/36, F16L 11/04, F16L 11/127

(54) **Mehrschichtverbund**
Composite multilayer structure
Structure multicouche

(30) Priorität: 29.06.1999 DE 19929883; 09.02.2000 DE 10005641
(43) Veröffentlichungstag der Anmeldung: 03.01.2001
(73) Patentinhaber: Degussa AG, 40474 Düsseldorf (DE)
(72) Erfinder: Häger, Harald, Dr., 45772 Marl (DE); Böer, Michael, 59399 Olfen (DE); Schmitz, Guido, Dr., 48249 Dülmen (DE); Oenbrink, Georg, Dr., 48249 Dülmen (DE); Richter, Ralf, Dr., 45657 Recklinghausen (DE)

(56) Entgegenhaltungen:
- EP-A- 0 287 839
- DE-C- 3 827 092
- DE-C- 19 633 133
- US-A- 3 442 975
- US-A- 5 258 213

## Beschreibung

Gegenstand der Erfindung ist ein Haftvermittler für einen Mehrschichtverbund sowie ein Mehrschichtverbund, der diesen Haftvermittler enthält.

Einzelne Polymere wie z. B. Polyamide oder Polyester sind für sich alleine für viele Anwendungen ungeeignet. So sind Polyamide beispielsweise nicht witterungsbeständig, da sie unter Belichtung altem sowie Luftfeuchtigkeit aufnehmen. Dies führt zu Verfärbung, Verschlechterung der mechanischen Eigenschaften sowie Verzugserscheinungen.

Obwohl Polyamide gute mechanische Eigenschaften, insbesondere gute Zähigkeit, aufweisen, haben sie eine schlechte Sperrwirkung. Insbesondere polare Substanzen können leicht durch Polyamide migrieren. Dies ist beispielsweise bei Kraftstoffleitungen, in denen alkoholhaltiger Kraftstoff gefördert wird, äußerst nachteilig.

Polyester sind im allgemeinen gut witterungsbeständig und besitzen eine ausgezeichnete Sperrwirkung sowohl gegenüber polaren als auch gegenüber unpolaren Medien. Sie sind jedoch in der Regel schlagempfindlich; insbesondere die Kerbschlagzähigkeit ist bei Polyestern häufig nicht ausreichend. Deshalb können Polyester in vielen Fällen, in denen andere Eigenschaften wie deren ausgezeichnete Sperrwirkung, hohe Temperaturbeständigkeit und gute Steifigkeit eigentlich erwünscht wären, für sich alleine nicht verwendet werden.

Auch andere Polymere zeigen in der Regel ein unausgewogenes Eigenschaftsbild und sind daher für viele Anwendungen ungeeignet.

Es wäre daher wünschenswert, wenn es gelänge, einen festen Verbund zwischen verschiedenen Polymeren, beispielsweise zwischen Polyamid und Polyester, herzustellen. Damit wäre es möglich, etwa Formkörper aus Polyamid durch Beschichten mit Polyester vor Licht und Feuchtigkeit zu schützen. Genauso könnte ein Formkörper aus Polyester durch Beschichten mit Polyamid vor chemischen und mechanischen Einflüssen geschützt werden. Weiterhin würde damit die Möglichkeit bestehen, Kraftstoffleitungen, die üblicherweise aus einem Polyamid (PA) wie PA 6, PA 11 oder PA 12 bestehen, mit einer Sperrschicht gegenüber Kraftstoff, insbesondere gegenüber alkoholhaltigem Kraftstoff, zu versehen. Andererseits sind Laminate aus verschiedenen Schichten, die unterschiedliche Funktionen haben, für Lebensmittelverpackungen geeigneter als Monoschichten.

Verbunde aus Polyamid und Polyester sind im Prinzip schon bekannt. In der EP-A-0 336 806 wird die Coextrusion von PA 12 und Polybutylenterephthalat (PBT) zu einem Zweischichtrohr beschrieben. In der DE-PS 38 27 092 wird ein Mehrschichtrohr beschrieben, das von innen nach außen Schichten aus Polyamid, Polyvinylalkohol, Polyamid und Polyester besitzt. Es ist allerdings dem Fachmann bekannt, daß die weitaus meisten Polymere, auch Polyamide und Polyester, miteinander unverträglich sind, weshalb bei der Herstellung von Polymerlaminaten keine Haftung zwischen den Laminatschichten erreicht wird. Ein fester Verbund zwischen den einzelnen Polymerschichten ist aber bei den üblichen technischen Anwendungen unbedingt erforderlich.

Die DE-OS 196 33 133 beschreibt ein mehrschichtiges Rohr aus zumindest zwei gut miteinander verbundenen Schichten, wobei die eine Schicht eine Sperrschicht ist und der Thermoplast der zweiten Schicht mit Polyethylenimin als Haftvermittler behandelt ist. Beim Nacharbeiten der DE-OS 196 33 133 stellt sich der gewünschte Effekt allerdings nicht ein.

An sich würde naheliegen, beispielsweise Polyester- und Polyamidschichten durch einen Haftvermittler zu verbinden, der aus einer Mischung aus Polyamid und Polyester besteht. Allerdings sind solche Blends, die üblicherweise durch Schmelzemischen in einem Extruder hergestellt werden, sehr spröde. Entsprechende Coextrusionsversuche zu Polyamid und Polyester zeigen entweder Haftung zum Polyamid oder zum Polyester, nie aber zu beiden Polymeren gleichzeitig.

Die EP-A-0 509 211 beschreibt thermoplastische Mehrschichtverbunde, bei denen eine Schicht aus einer Polyamidformmasse und eine Schicht aus einer Polyesterformmasse durch einen Haftvermittler verbunden ist, der eine Mischung aus Polyamid und Polyester enthält. Da hier die oben diskutierten Probleme auftreten, liegt in einer bevorzugten Ausführungsform beim Haftvermittler zumindest ein Teil des Polyamidanteils und des Polyesteranteils als Polyamid-Polyester-Blockcopolymer vor. Die Herstellung derartiger Blockcopolymerer ist jedoch nicht ganz einfach und erfordert den Zusatz von Hilfsstoffen oder Katalysatoren. Außerdem ist eine genaue Kontrolle der Endgruppen erforderlich, da die Blockcopolymere durch Verknüpfung geeigneter Endgruppen hergestellt werden und daher sichergestellt sein muß, daß die passenden Endgruppen in ausreichender Konzentration vorliegen. Da Handelsprodukte an diese Erfordernisse nicht angepaßt sind, muß man Sondertypen herstellen, die anschließend zu einem Blockcopolymer umgesetzt werden. Die Produktion derartiger Haftvermittler ist daher mit einem hohen Aufwand verbunden. Dies gilt in noch gesteigertem Maße für die Blockcopolyesteramide, die im Verfahren der EP-A-0 837 088 als Haftvermittler in Polyamid-Polyester-Mehrschichtverbunden eingesetzt werden.

Auch Verbunde aus anderen Materialien sind Stand der Technik; wegen der Unverträglichkeit der meisten Polymerwerkstoffe existieren jedoch meist Speziallösungen mit individuell angepaßtem Haftvermittler.

Die Aufgabe der Erfindung bestand darin, einen preisgünstigen, leicht herzustellenden, aber trotzdem wirksamen Haftvermittler für einen Mehrschichtverbund bereitzustellen. Bei einem derartigen Mehrschichtverbund sollte auch im Kontakt mit Reagenzien wie z. B. Kraftstoff, Lösemitteln, Ölen oder Fetten sowie bei höherer Temperatur die Schichtenhaftung über lange Zeit erhalten bleiben.

Diese Aufgabe wurde durch einen thermoplastischen Mehrschichtverbund gelöst, der eine Schicht I aus einer thermoplastischen Formmasse, eine Schicht II aus einer weiteren thermoplastischen Formmasse und dazwischen eine Schicht aus einem Haftvermittler enthält, welcher zu mindestens 5 Gew.-%, bevorzugt zu mindestens 10 Gew.-% und besonders bevorzugt zu mindestens 20 Gew.-% aus einem Pfropfcopolymer besteht, das unter Verwendung folgender Monomere hergestellt wird:
a) 0,5 bis 25 Gew.-%, bevorzugt 1 bis 20 Gew.-% und besonders bevorzugt 1,5 bis 16 Gew.-%, bezogen auf das Pfropfcopolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäure.

In einer bevorzugten Ausführungsform liegt die Aminogruppenkonzentration des Pfropfcopolymers im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992)
- Polyamine, die aus alternierenden Polyketonen hergestellt werden (DE-OS 196 54 058)
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179) oder
   Tris(2-aminoethyl)amin, N,N-Bis(2-aminoethyl)-N',N'-bis[2-[bis(2-aminoethyl)amino]ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/-Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/-Terephthalsäure/Laurinlactam oder Dodecamethylendiamin/2,6-Naphthalindicarbonsäure/Laurinlactam.

In einer bevorzugten Ausführungsform wird das Pfropfcopolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Auf diese Weise besitzen die polyamidbildenden Monomere insgesamt einen leichten Überschuß an Carboxylgruppen. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und inbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit und die Spannungsrißbeständigkeit, aber auch das Quellungsverhalten und damit verbunden die Dimensionsbeständigkeit sowie die Sperrwirkung gegen Diffusion.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, daß das Pfropfcopolymer einen substantiellen Anteil an Aminogruppen besitzt. Vorzugsweise liegt die Aminogruppenkonzentration des Pfropfcopolymers im Bereich von 150 bis 1 500 mmol/kg, besonders bevorzugt im Bereich von 250 bis 1 300 mmol/kg und ganz besonders bevorzugt im Bereich von 300 bis 1 100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die erfindungsgemäßen Pfropfcopolymere können nach verschiedenen Verfahren hergestellt werden.

Eine Möglichkeit besteht darin, Lactam bzw. ω-Aminocarbonsäure und Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, daß in einem zweistufigen Prozeß zuerst die Lactamspaltung und Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, daß eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das ultrahochverzweigte Polyamid gemäß dem Stand der Technik auch in fester Phase nachkondensiert werden.
Mit diesem Haftvermittler kann eine Vielzahl von Polymeren bzw. darauf basierender Formmassen miteinander verbunden werden. Generell eignen sich alle Polymere, die wegen struktureller Ähnlichkeit mit dem erfindungsgemäß verwendeten Pfropfcopolymer physikalisch verträglich sind, wie z. B. Polyamide. Gleichermaßen geeignet sind alle Polymere, die mit den Aminogruppen des Pfropfcopolymers eine chemische Verknüpfungsreaktion eingehen oder zumindest Wasserstoffbrücken ausbilden, wie beispielsweise Polyester.

Erfindungsgemäße Ausführungsformen sind beispielsweise:
- Ein Mehrschichtverbund, der Schichten aus verschiedenen, miteinander weniger verträglichen oder unverträglichen Polyamid-Formmassen enthält, die durch den erfindungsgemäßen Haftvermittler verbunden sind.
- Ein Mehrschichtverbund, der Schichten aus verschiedenen, miteinander unverträglichen Polyester-Formmassen enthält, die durch den erfindungsgemäßen Haftvermittler verbunden sind.
- Ein Mehrschichtverbund, der eine Schicht aus einer Polyamidformmasse enthält, die durch den erfindungsgemäßen Haftvermittler mit einer Schicht aus einer anderen Formmasse verbunden ist, welche auf einem Polymeren basiert, das kein Polyamid ist.
- Ein Mehrschichtverbund, der eine Schicht aus einer Polyesterformmasse enthält, die durch den erfindungsgemäßen Haftvermittler mit einer Schicht aus einer anderen Formmasse verbunden ist, welche auf einem Polymeren basiert, das kein Polyester ist.
- Ein Mehrschichtverbund, der folgende Schichten enthält.
   I. Eine Schicht I aus einer Polyamid-Formmasse;
   II. eine Schicht II aus einer Polyester-Formmasse; dazwischen eine Schicht aus dem erfindungsgemäßen Haftvermittler.

Als Polyamide kommen hierbei in erster Linie aliphatische Homo- und Copolykondensate in Frage, beispielsweise PA 46, PA 66, PA 68, PA 612, PA 88, PA 810, PA 1010, PA 1012, PA 1212, PA 6, PA 7, PA 8, PA 9, PA 10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z. B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl )methan, Trimethylhexamethylendiamin, Hexamethylendiamin oder ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Die Polyamidformmasse kann entweder eines dieser Polyamide oder mehrere als Gemisch enthalten. Weiterhin können bis zu 40 Gew.-% andere Thermoplaste enthalten sein, sofern diese die Verbundfähigkeit nicht stören, insbesondere schlagzähmachende Kautschuke wie Ethylen/Propylen- oder Ethylen/Propylen/Dien-Copolymere (EP-A-0 295 076), Polypentenylen, Polyoctenylen, statistische bzw. blockartig aufgebaute Copolymere aus alkenylaromatischen Verbindungen mit aliphatischen Olefinen oder Dienen (EP-A-0 261 748) oder Kern/Schale-Kautschuke mit einem zähelastischen Kern aus (Meth)Acrylat-, Butadienoder Styrol/Butadien-Kautschuk mit Glastemperaturen T_{g}< -10 °C, wobei der Kern vernetzt sein kann und die Schale aus Styrol und/oder Methylmethacrylat und/oder weiteren ungesättigten Monomeren aufgebaut sein kann (DE-OSS 21 44 528, 37 28 685).

Der Polyamidformmasse können die für Polyamide üblichen Hilfs- und Zusatzstoffe wie z. B. Flammschutzmittel, Stabilisatoren, Weichmacher, Verarbeitungshilfsmittel, Füllstoffe, insbesondere zur Verbesserung der elektrischen Leitfähigkeit, Verstärkungsfasern, Pigmente oder ähnliches zugefügt werden. Die Menge der genannten Mittel ist so zu dosieren, daß die gewünschten Eigenschaften nicht ernsthaft beeinträchtigt werden.

Als Polyester kommen linear aufgebaute, thermoplastische Polyester infrage. Diese werden durch Polykondensation von Diolen mit Dicarbonsäure bzw. deren polyesterbildenden Derivaten wie Dimethylestem hergestellt. Geeignete Diole haben die Formel HO-R-OH, wobei R einen divalenten, verzweigten oder unverzweigten aliphatischen und/oder cycloaliphatischen Rest mit 2 bis 40, vorzugsweise 2 bis 12, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, Hexamethylenglykol, Neopentylglykol, Cyclohexandimethanol sowie das C₃₆-Diol Dimerdiol genannt. Die Diole können alleine oder als Diolgemisch eingesetzt werden.

Bis zu 25 Mol-% des genannten Diols können durch ein Polyalkylenglykol mit nachstehender allgemeiner Formel ersetzt sein, 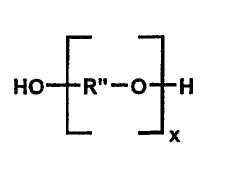 wobei R einen zweiwertigen Rest mit 2 bis 4 C-Atomen bedeutet und x einen Wert von 2 bis 50 annehmen kann.

Als aromatische Dicarbonsäuren kommen z. B. Terephthalsäure, Isophthalsäure, 1.4-, 1.5-, 2.6- bzw. 2.7-Naphthalindicarbonsäure, Diphensäure und Diphenylether-4.4-dicarbonsäure infrage. Bis zu 30 Mol-% dieser Dicarbonsäuren können durch aliphatische oder cycloaliphatische Dicarbonsäuren wie z. B. Bernsteinsäure, Adipinsäure, Sebacinsäure, Dodecandisäure oder Cyclohexan-1.4-dicarbonsäure ersetzt sein.

Beispiele für geeignete Polyester sind Polyethylenterephthalat, Polypropylenterephthalat, Polybutylenterephthalat, Polyethylen-2.6-naphthalat, Polypropylen-2.6-naphthalat und Polybutylen-2.6-naphthalat.

Die Herstellung dieser Polyester gehört zum Stand der Technik (DE-OSS 24 07 155, 24 07 156; Ullmanns Encyclopädie der technischen Chemie, 4. Aufl., Bd. 19, Seiten 65 ff., Verlag Chemie, Weinheim, 1980).

Die Polyesterformmasse kann entweder einen dieser Polyester oder mehrere als Gemisch enthalten. Weiterhin können bis zu 40 Gew.-% anderer Thermoplaste enthalten sein, sofern diese die Verbundfähigkeit nicht stören, insbesondere schlagzähmachende Kautschuke, wie oben für das Polyamid bereits angegeben. Weiterhin kann die Polyesterformmasse die für Polyester üblichen Hilfs- und Zusatzstoffe enthalten wie z. B. Flammschutzmittel, Stabilisatoren, Verarbeitungshilfsmittel, Füllstoffe, insbesondere zur Verbesserung der elektrischen Leitfähigkeit, Verstärkungsfasern, Pigmente oder ähnliches. Die Menge der genannten Mittel ist so zu dosieren, daß die gewünschten Eigenschaften nicht ernsthaft beeinträchtigt werden.

In der Regel besitzt die Polyamid-Formmasse eine kontinuierliche Polyamidphase und die Polyester-Formmasse eine kontinuierliche Polyesterphase.

Enthält der Verbund eine Schicht aus einer Polyamidformmasse, so enthält der Haftvermittler in einer bevorzugten Ausführungsform zusätzlich zum Pfropfcopolymer ein Polyamid, insbesondere bevorzugt 10 bis 90 Gew.-%, bezogen auf die Summe von Pfropfcopolymer und Polyamid.

Enthält der Verbund eine Schicht aus einer Polyesterformmasse, so enthält der Haftvermittler in einer weiteren bevorzugten Ausführungsform zusätzlich zum Pfropfcopolymer einen Polyester, insbesondere bevorzugt 10 bis 90 Gew.-%, bezogen auf die Summe von Pfropfcopolymer und Polyester.

Enthält der Verbund eine Schicht I aus einer Polyamidformmasse und eine Schicht II aus einer Polyesterformmasse, die durch den erfindungsgemäßen Haftvermittler miteinander verbunden sind, so ist bevorzugt, daß der Haftvermittler zusätzlich zum Pfropfcopolymer sowohl ein Polyamid als auch einen Polyester enthält. Entsprechende Formmassen sind ebenfalls Gegenstand der Erfindung.

In dieser Ausführungsform enthält der Haftvermittler vorzugsweise folgende Zusammensetzung:
I. 5 bis 60 Gew.-Teile eines Pfropfcopolymers, das unter Verwendung folgender Monomerer hergestellt wird:
   a) 0,5 bis 25 Gew.-%, bezogen auf das Pfropfcopolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
   b) polyamidbildende Monomere, ausgewählt aus Lactamen, ω-Aminocarbonsäuren und/oder äquimolaren Kombinationen von Diamin und Dicarbonsäure;
II. 10 bis 85 Gew.-Teile eines Polyamids;
III. 10 bis 85 Gew.-Teile eines Polyesters;
   wobei die Summe der Gew.-Teile von I., II. und III. 100 ergibt;
IV. maximal 40 Gew.-Teile Zusatzstoffe, ausgewählt aus schlagzähmachendem Kautschuk und/oder üblichen Hilfs- bzw. Zuschlagstoffen.

Das Polyamid des Haftvermittlers soll mit dem Polyamid der Schicht I gut verträglich sein und somit zusätzlich eine gute Haftung ermöglichen. Geeignete Polyamidkombinationen sind dem Fachmann bekannt oder können durch einfache Routineversuche, z. B. mittels Preßplatten, leicht ermittelt werden. Häufig reicht es aus, wenn beide Polyamide mindestens einen Monomerbaustein gemeinsam haben oder wenn beide einen einander entsprechenden Monomerbaustein mit gleicher C-Atomzahl oder mit gleicher Länge besitzen. Am besten sollte das Polyamid dem Polyamid der Schicht I weitestgehend entsprechen.

Das gleiche gilt für den Polyester des Haftvermittlers, der mit dem Polyester der Schicht II gut verträglich sein soll. Auch hier sind geeignete Polyesterkombinationen dem Fachmann bekannt oder können durch einfache Routineversuche, z. B. mittels Preßplatten, leicht ermittelt werden. Häufig reicht es aus, wenn beide Polyester mindestens einen Monomerbaustein gemeinsam haben oder wenn entsprechende Monomerbausteine zumindest ähnlich sind. Am besten sollte der Polyester dem Polyester der Schicht II weitestgehend entsprechen.

Der Haftvermittler kann neben dem Pfropfcopolymer sowie gegebenenfalls dem Polyamid und/oder dem Polyester als Zusatzstoffe auch weitere Komponenten wie z. B. einen schlagzähmachenden Kautschuk und/oder Hilfs- bzw. Zuschlagstoffe enthalten, wie sie weiter oben als mögliche Bestandteile der Schichten I und II näher erläutert sind. Die Menge aller Zusatzstoffe beträgt insgesamt maximal 40 Gew.-Teile, bevorzugt maximal 30 Gew.-Teile und besonders bevorzugt maximal 20 Gew.-Teile.

Beim erfindungsgemäßen Mehrschichtverbund handelt es sich in einer Ausführungsform um ein Rohr, einen Einfüllstutzen oder um einen Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z. B. US 5 460 771), weshalb sich weitere Ausführungen hierzu erübrigen. Wichtige Einsatzzwecke sind die Verwendung als Kraftstoffleitung, als Tankeinfüllstutzen, als Vapor Line (d. h. Leitung, in der Kraftstoffdämpfe geleitet werden, z. B. Entlüftungsleitungen), als Tankstellenleitung, als Kühlflüssigkeitsleitung, als Klimaanlagenleitung oder als Kraftstoffbehälter.

Der erfindungsgemäße Mehrschichtverbund kann auch als flächiger Verbund vorliegen, beispielsweise als Folie, etwa als Verpackungsfolie für Lebensmittel, als Verbundkörper mit Deckschicht zur Verbesserung der UV-Beständigkeit oder als extrudierte Mehrschichttafel.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω cm.

Bei der Ausführung des erfindungsgemäßen Mehrschichtverbundes als Rohr kann dieses noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf das Rohr aufgebracht werden, beispielsweise mittels Extrusion über einen Querspritzkopf oder dadurch, daß ein vorgefertigter Elastomerschlauch über das fertig extrudierte Mehrschichtrohr geschoben wird.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion oder des Coextrusionsblasformens, oder mittels mehrstufiger Verfahren, wie z. B. in US 5 554 425 beschrieben.

Der Mehrschichtverbund kann in der einfachsten Ausführungsform aus der Schicht I, dem Haftvermittler und der Schicht II bestehen; unter Verwendung zusätzlicher Schichten können aber auch beispielsweise folgende Schichtenkonfigurationen vorliegen:
Kautschuk/Schicht I/Haftvermittler/Schicht II;
Schicht I/Haftvermittler/Schicht II/elektrisch leitfähige Schicht II;
Schicht I/Haftvermittler/Schicht II/Haftvermittler/Schicht I;
Schicht I/Haftvermittler/Schicht II/Haftvermittler/elektrisch leitfähige Schicht I;
Kautschuk/Schicht I/Haftvermittler/Schicht II/Haftvermittler/Schicht I/elektrisch leitfähige Schicht I;
Schicht II/Haftvermittler/Schicht I/elektrisch leitfähige Schicht I.

Die in den Beispielen aufgeführten Ergebnisse wurden mit Hilfe nachstehender Meßverfahren bestimmt.

Zur Bestimmung der Carboxylendgruppen wurde 1 g Pfropfcopolymer in 50 ml Benzylalkohol unter Stickstoffabdeckung bei 165 °C gelöst. Die Lösezeit betrug maximal 20 min. Die Lösung wurde mit einer Lösung von KOH in Ethylenglykol (0,05 mol KOH/l) gegen Phenolphthalein bis zum Farbumschlag titriert.

Zur Bestimmung der Aminogruppen wurde 1 g des Pfropfcopolymers in 50 ml m-Kresol bei 25 °C gelöst. Die Lösung wurde mit Perchlorsäure potentiometrisch titriert.

Die Bestimmung der Lösungsviskosität ηᵣₑₗ (relative Viskosität) erfolgte unter Verwendung einer 0,5 gew.-%igen m-Kresol-Lösung bei 25 °C gemäß DIN 53727/ISO 307.

### Beispiele:

In den Versuchen wurden folgende Komponenten verwendet:

### Pfropfcopolymer 1:

29,7 kg Laurinlactam wurden in einem Aufheizkessel bei 180 °C bis 210 °C aufgeschmolzen und in einen druckfesten Polykondensationskessel überführt; anschließend wurden 1,5 kg Wasser und 1,71 g Hypophosphorige Säure zugegeben. Die Laurinlactamspaltung wurde bei 280 °C unter dem sich einstellenden Eigendruck durchgeführt; danach wurde innerhalb von 3 Stunden auf einen Restwasserdampfdruck von 3 bar entspannt und 300 g Polyethylenimin (LUPASOL G 100 der BASF AG, Ludwigshafen) zudosiert. Das Polyethylenimin wurde bei dem sich einstellenden Eigendruck eingearbeitet; anschließend wurde auf Atmosphärendruck entspannt und dann 2 Stunden bei 280 °C Stickstoff über die Schmelze geleitet. Die klare Schmelze wurde über eine Schmelzepumpe als Strang ausgetragen, im Wasserbad abgekühlt und anschließend granuliert.
ηᵣₑₗ: 1,68
Schmelztemperatur Tₘ: 175 °C
Aminogruppenkonzentration: 225 mmol/kg
Carboxylendgruppenkonzentration: < 10 mmollkg

### Pfropfcopolymer 2:

9,5 kg Laurinlactam wurden in einem Aufheizkessel bei 180 °C bis 210 °C aufgeschmolzen und in einen druckfesten Polykondensationskessel überführt; anschließend wurden 475 g Wasser und 0,54 g Hypophosphorige Säure zugegeben. Die Lactamspaltung wurde bei 280 °C unter dem sich einstellenden Eigendruck durchgeführt; danach wurde innerhalb von 3 Stunden auf einen Restwasserdampfdruck von 5 bar entspannt und 500 g Polyethylenimin (LUPASOL G 100 der BASF AG, Ludwigshafen) sowie 15 g Dodecandisäure zudosiert. Beide Komponenten wurden unter dem sich einstellenden Eigendruck eingearbeitet; anschließend wurde auf Atmosphärendruck entspannt und dann 2 Stunden bei 280 °C Stickstoff über die Schmelze geleitet. Die klare Schmelze wurde über eine Schmelzepumpe als Strang ausgetragen, im Wasserbad abgekühlt und anschließend granuliert.
ηᵣₑₗ: 1,52
Schmelztemperatur Tₘ: 169 °C
Aminogruppenkonzentration: 810 mmol/kg
Carboxylendgruppenkonzentration: < 10 mmol/kg

- PA 1:: Extrusionsfähige PA 12-Formmasse mit ηᵣₑₗ = 2,1 und einem Überschuß an Carboxylendgruppen
- PA 2:: Extrusionsfähige PA 12-Formmasse mit ηᵣₑₗ = 2,1 und einem Überschuß an Aminoendgruppen
- PES 1:: VESTODUR 1000, ein Homopolybutylenterephthalat der Degussa-Hüls AG mit einer Lösungsviskosität J, gemessen in Phenol/o-Dichlorbenzol (1 : 1), von 107 cm³/g
- PES 2:: VESTODUR 3000, ein Homopolybutylenterephthalat der Degussa-Hüls AG mit einer Lösungsviskosität J von 165 cm³/g
- EXXELOR VA 1803:: Ein mit ca. 1 % Maleinsäureanhydrid funktionalisierter EPM-Kautschuk der Fa. Exxon Chemical, Köln

### Polyamid der Schicht I:

- PA 3:: Extrusionsfähige, weichgemachte, schlagzähmodifizierte PA 12-Formmasse mit ηᵣₑₗ = 2,1 und einem Überschuß an Carboxylendgruppen

### Polyester der Schicht II:

- PES 3:: VESTODUR 2000, ein Homopolybutylenterephthalat der Degussa-Hüls AG mit einer Lösungsviskosität J von 145 cm³/g

### Beispiel 1:

Bei 250 °C und einer Preßzeit von 30 s wurde ein Preßplatten-Dreischichtverbund aus PA 3, Pfropfcopolymer 1 als Haftvermittler und PES 3 hergestellt. Hierbei wurde sowohl zur Polyester- als auch zur Polyamidschicht eine untrennbare Haftung erhalten.

### Beispiel 2:

Wie Beispiel 1, jedoch mit Pfropfcopolymer 2 als Haftvermittler. Auch hier wurde sowohl zur Polyester- als auch zur Polyamidschicht eine untrennbare Haftung erhalten.

### Vergleichsbeispiel 1:

Wie im Beispiel 1 wurde ein Preßplattenverbund aus PA 3 und PES 3 hergestellt. Anstelle des Pfropfcopolymer 1 wurde LUPASOL G 100 in wasserfreier Form auf die Oberseite der Platte aus PA 3, die mit PES 3 verbunden werden sollte, in sehr dünner Schicht aufgebracht.

Nach dem Pressen und Abkühlen wurde die Platte entnommen und die Schichtenhaftung überprüft. Dabei erwies sich, daß keine Haftung vorlag.

### Vergleichsbeispiel 2:

In einem Haake-Laborkneter wurden gemäß Tabelle 1 vier verschiedene Blends aus PA 2 und Polyethylenimin (LUPASOL G 100 in wasserfreier Form der BASF AG, Ludwigshafen) hergestellt.

**Tabelle 1**

| Blends aus Polyamid und Polyethylenimin | | | | |
|---|---|---|---|---|
| Blendkomponente | Gewichtsteile | | | |
| PA 2 | 99 | 95 | 90 | 80 |
| Polyethylenimin | 1 | 5 | 10 | 20 |
| Die Vermischung erfolgte innerhalb von 8 Minuten bei 180 °C und 64 Upm. | | | | |

Die Mischungen wurden anschließend zerkleinert und auf eine spritzgegossene Platte aus PES 1 aufgegeben, die sich in einer Preßform befand. Anschließend wurde wie im Beispiel 1 angegeben verpreßt.
In allen vier Fällen erwies sich beim Überprüfen der Schichtenhaftung, daß der Verbund an der Grenzfläche bereits mit der Hand gelöst werden konnte.

### Haftvermittler - Blends:

### HV 1 (nicht erfindungsgemäß):

12,6 kg PA 1 und 22,82 kg PES 1 wurden auf einem Doppelschneckenkneter ZE 25 33D der Fa. Berstorff bei 270 °C und 200 U/min sowie mit einem Durchsatz von 10 kg/h schmelzegemischt, stranggepreßt und granuliert.

### HV 2 (erfindungsgemäß):

12,6 kg PA 2, 22,82 kg PES 1 und 5,0 kg Pfropfcopolymer 2 wurden auf einem Doppelschneckenkneter ZE 25 33D der Fa. Berstorff bei 270 °C und 150 U/min sowie einem Durchsatz von 10 kg/h schmelzegemischt, stranggepreßt und granuliert.

### HV 3 (erfindungsgemäß):

12,6 kg PA 2, 22,82 kg PES 2 und 5,0 kg Pfropfcopolymer 2 wurden auf einem Doppelschneckenkneter ZE 25 33D der Fa. Berstorff bei 270 °C und 150 U/min sowie einem Durchsatz von 10 kg/h schmelzegemischt, stranggepreßt und granuliert.

### HV 4 (erfindungsgemäß):

Wie HV 3, aber unter zusätzlicher Verwendung von 4,0 kg EXXELOR VA 1803.

### Vergleichsbeispiel 3 sowie Beispiele 3 bis 5:

Zur Herstellung der Mehrschichtverbunde wurde ein Bändchencoextrusionswerkzeug verwendet mit einer Austrittsbreite von 30 mm, wobei die Zusammenführung der verschiedenen Schichten im Werkzeug kurz vor dem Austritt der Schmelze aus dem Werkzeug erfolgte. Das Werkzeug wurde hierbei von drei Storck 25-Extrudern gespeist. Nach dem Austritt aus dem Werkzeug wurde der Dreischichtverbund auf eine Kühlwalze aufgelegt und abgezogen (Chill-Roll-Verfahren).

Die Ergebnisse sind in der folgenden Tabelle wiedergegeben; die dort angegebenen Haftungsnoten bedeuten:
- 0: keine Haftung
- 1: geringfügige Haftung
- 2: etwas Haftung; mit geringem Aufwand zu trennen
- 3: gute Haftung; nur mit großem Aufwand und gegebenenfalls mit Hilfe von Werkzeugen zu trennen
- 4: nicht trennbar

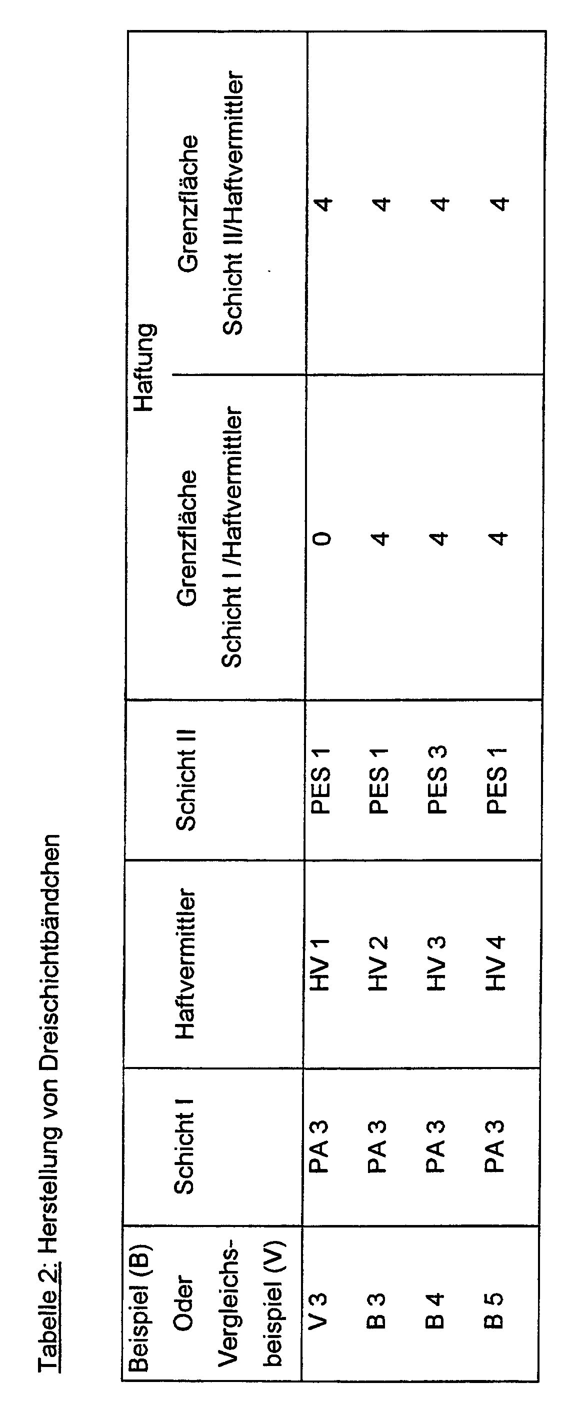

Die erfindungsgemäßen Beispiele 4 und 5 wurden zusätzlich in modifizierter Form wiederholt, indem Dreischichtrohre mit der entsprechenden Schichtenkonfiguration (mit PA 3 als Außenschicht) hergestellt wurden. Die Ergebnisse sind deckungsgleich (in allen Fällen Haftungsnote 4).

In allen untersuchten Fällen war die Langzeitbeständigkeit der Mehrschichtverbunde im Kontakt mit alkoholhaltigem Kraftstoff sowohl bei 40 °C als auch bei 60 °C ausgezeichnet.

## Patentansprüche

1. Thermoplastischer Mehrschichtverbund, der folgende Schichten enthält:
I. eine Schicht I aus einer thermoplastischen Formmasse;
II. eine Schicht II aus einer weiteren thermoplastischen Formmasse;
dazwischen eine Schicht aus einem Haftvermittler, der zu mindestens 5 Gew.-% aus einem Pfropfcopolymer besteht, das unter Verwendung folgender Monomere hergestellt wird:
a) 0,5 bis 25 Gew.-%, bezogen auf das Pfropfcopolymer, eines Polyamins mit mindestens 4 Stickstoffatomen und einem zahlenmittleren Molekulargewicht Mₙ von mindestens 146 g/mol sowie
b) polyamidbildende Monomere, ausgewählt aus Lactamen, ω-Aminocarbonsäuren und/oder äquimolaren Kombinationen von Diamin und Dicarbonsäure.

2. Thermoplastischer Mehrschichtverbund gemäß Anspruch 1,
**dadurch gekennzeichnet,**
**daß** mindestens eine der Schichten I und II aus einer Polyamid-Formmasse oder einer Polyester-Formmasse besteht.

3. Thermoplastischer Mehrschichtverbund gemäß einem der vorhergehenden Ansprüche,
**dadurch gekennzeichnet,**
**daß** die Schicht I aus einer Polyamid-Formmasse und die Schicht II aus einer Polyester-Formmasse besteht.

4. Thermoplastischer Mehrschichtverbund gemäß einem der vorhergehenden Ansprüche,
**dadurch gekennzeichnet,**
**daß** das Polyamin mindestens 8 Stickstoffatome enthält.

5. Thermoplastischer Mehrschichtverbund gemäß einem der vorhergehenden Ansprüche,
**dadurch gekennzeichnet,**
**daß** das Polyamin mindestens 11 Stickstoffatome enthält.

6. Thermoplastischer Mehrschichtverbund gemäß einem der vorhergehenden Ansprüche,
**dadurch gekennzeichnet,**
**daß** das Polyamin ein zahlenmittleres Molekulargewicht Mₙ von mindestens 500 g/mol besitzt.

7. Thermoplastischer Mehrschichtverbund gemäß einem der vorhergehenden Ansprüche,
**dadurch gekennzeichnet,**
**daß** das Polyamin ein zahlenmittleres Molekulargewicht Mₙ von mindestens 800 g/mol besitzt.

8. Thermoplastischer Mehrschichtverbund gemäß einem der vorhergehenden Ansprüche,
**dadurch gekennzeichnet,**
**daß** die Aminogruppenkonzentration des Pfropfcopolymers im Bereich von 100 bis 2 500 mmol/kg liegt.

9. Thermoplastischer Mehrschichtverbund gemäß einem der vorhergehenden Ansprüche,
**dadurch gekennzeichnet,**
**daß** das Pfropfcopolymer unter Verwendung folgender zusätzlicher Monomere hergestellt wird:
c) Oligocarbonsäure, ausgewählt aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere.

10. Thermoplastischer Mehrschichtverbund gemäß einem der Ansprüche 2 und 3,
**dadurch gekennzeichnet,**
**daß** der Haftvermittler zusätzlich zum Pfropfcopolymer ein Polyamid und/oder einen Polyester enthält.

11. Mehrschichtverbund gemäß einem der vorhergehenden Ansprüche,
**dadurch gekennzeichnet,**
**daß** er mehr als eine Schicht I und/oder mehr als eine Schicht II enthält.

12. Mehrschichtverbund gemäß einem der vorhergehenden Ansprüche,
**dadurch gekennzeichnet,**
**daß** eine der Schichten elektrisch leitfähig eingestellt ist.

13. Mehrschichtverbund gemäß einem der Ansprüche 1 bis 11,
**dadurch gekennzeichnet,**
**daß** sich an die innerste Schicht noch eine zusätzliche, elektrisch leitfähige Schicht anschließt.

14. Mehrschichtverbund gemäß einem der vorhergehenden Ansprüche,
**dadurch gekennzeichnet,**
**daß** er ein Rohr ist.

15. Mehrschichtverbund gemäß Anspruch 14,
**dadurch gekennzeichnet,**
**daß** er vollständig oder in Teilbereichen gewellt ist.

16. Mehrschichtverbund gemäß einem der Ansprüche 14 und 15,
**dadurch gekennzeichnet,**
**daß** sich an die äußerste Schicht noch eine Kautschukschicht anschließt.

17. Mehrschichtverbund gemäß einem der Ansprüche 14 bis 16,
**dadurch gekennzeichnet,**
**daß** er eine Kraftstoffleitung, eine Bremsflüssigkeitsleitung, eine Kühlflüssigkeitsleitung, eine Hydraulikflüssigkeitsleitung, eine Tankstellenleitung, eine Klimaanlagenleitung oder eine Vapor Line ist.

18. Mehrschichtverbund gemäß einem der Ansprüche 1 bis 13,
**dadurch gekennzeichnet,**
**daß** er ein Hohlkörper ist.

19. Mehrschichtverbund gemäß einem der Ansprüche 1 bis 13 sowie 18,
**dadurch gekennzeichnet,**
**daß** er ein Behälter, insbesondere ein Kraftstoffbehälter, oder ein Einfüllstutzen, insbesondere ein Tankeinfüllstutzen ist.

20. Mehrschichtverbund gemäß einem der Ansprüche 1 bis 13,
**dadurch gekennzeichnet,**
**daß** er eine Folie oder eine Mehrschichttafel ist.

21. Mehrschichtverbund gemäß einem der vorhergehenden Ansprüche,
**dadurch gekennzeichnet,**
**daß** er mittels Mehrkomponentenspritzguß, Coextrusion oder Coextrusionsblasformen hergestellt wird.

22. Formmasse, die folgende Komponenten enthält:
I. 5 bis 60 Gew.-Teile eines Pfropfcopolymeren, das unter Verwendung folgender Monomerer hergestellt wird:
a) 0,5 bis 25 Gew.-%, bezogen auf das Pfropfcopolymer, eines Polyamins mit mindestens 4 Stickstoffatomen und einem zahlenmittleren Molekulargewicht Mₙ von mindestens 146 g/mol sowie
b) polyamidbildende Monomere, ausgewählt aus Lactamen, ω-carbonsäuren und/oder äquimolaren Kombinationen von Diamin und Dicarbonsäure;
II. 10 bis 85 Gew.-Teile eines Polyamids;
III. 10 bis 85 Gew.-Teile eines Polyesters;
wobei die Summe der Gew.-Teile von I., II. und III. 100 ergibt;
IV. maximal 40 Gew.-Teile Zusatzstoffe, ausgewählt aus schlagzähmachendem Kautschuk und/oder üblichen Hilfs- bzw. Zuschlagstoffen.

## Claims

1. A thermoplastic multilayer composite which comprises the following layers:
I. a layer I of a thermoplastic moulding composition;
II. a layer II of a further thermoplastic moulding composition;
in between a layer of an adhesion promoter which comprises at least 5% by weight of a graft copolymer prepared using the following monomers:
a) from 0.5 to 25% by weight, based on the graft copolymer, of a polyamine having at least 4 nitrogen atoms and having a number average molecular weight Mₙ of at least 146 g/mol, and
b) polyamide-forming monomers selected from lactams, ω-aminocarboxylic acids and/or equimolar combinations of diamine and dicarboxylic acid.

2. A thermoplastic multilayer composite according to claim 1, **characterized in that** at least one of the layers I and II comprises a polyamide moulding composition or a polyester moulding composition.

3. A thermoplastic multilayer composite according to either one of the preceding claims, **characterized in that** layer I comprises a polyamide moulding composition and layer II comprises a polyester moulding composition.

4. A thermoplastic multilayer composite according to any one of the preceding claims, **characterized in that** the polyamine contains at least 8 nitrogen atoms.

5. A thermoplastic multilayer composite according to any one of the preceding claims, **characterized in that** the polyamine contains at least 11 nitrogen atoms.

6. A thermoplastic multilayer composite according to any one of the preceding claims, **characterized in that** the polyamine has a number average molecular weight Mₙ of at least 500 g/mol.

7. A thermoplastic multilayer composite according to any one of the preceding claims, **characterized in that** the polyamine has a number average molecular weight Mₙ of at least 800 g/mol.

8. A thermoplastic multilayer composite according to any one of the preceding claims, **characterized in that** the amino group concentration of the graft copolymer is in the range from 100 to 2500 mmol/kg.

9. A thermoplastic multilayer composite according to any one of the preceding claims, **characterized in that** the graft copolymer is prepared using the following additional monomers:
c) oligocarboxylic acid, selected from 0.015 to about 3 mol% of dicarboxylic acid and 0.01 to about 1.2 mol% of tricarboxylic acid, in each case based on the sum of the other polyamide-forming monomers.

10. A thermoplastic multilayer composite according to either one of claims 2 and 3, **characterized in that** the adhesion promoter comprises a polyamide and/or a polyester in addition to the graft copolymer.

11. A multilayer composite according to any one of the preceding claims, **characterized in that** it comprises more than one layer I and/or more than one layer II.

12. A multilayer composite according to any one of the preceding claims, **characterized in that** one of the layers has been rendered electrically conductive.

13. A multilayer composite according to any one of claims 1 to 11, **characterized in that** an additional, electrically conductive layer is adjacent to the innermost layer.

14. A multilayer composite according to any one of the preceding claims, **characterized in that** it is in the form of a pipe.

15. A multilayer composite according to claim 14, **characterized in that** it is corrugated fully or in part regions.

16. A multilayer composite according to either one of claims 14 and 15, **characterized in that** a rubber layer is adjacent to the outermost layer.

17. A multilayer composite according to any one of claims 14 to 16, **characterized in that** it is in the form of fuel line, a brake fluid line, a cooling fluid line, a hydraulic fluid line, a petrol station line, an air conditioning plant line or a vapour line.

18. A multilayer composite according to any one of claims 1 to 13, **characterized in that** it is in the form of a hollow article.

19. A multilayer composite according to any one of claims 1 to 13 and 18, **characterized in that** it is in the form of a tank, in particular a fuel tank, or a filler neck, in particular a.tank filler neck.

20. A multilayer composite according to any one of claims 1 to 13, **characterized in that** it is in the form of a film or a multilayer plate.

21. A multilayer composite according to any one of the preceding claims, **characterized in that** it is produced by multi-component injection moulding, coextrusion or coextrusion blow moulding.

22. A moulding composition which comprises the following components:
I. from 5 to 60 parts by weight of a graft copolymer prepared using the following monomers:
a) from 0.5 to 25% by weight, based on the graft copolymer, of a polyamine having at least 4 nitrogen atoms and having a number average molecular weight Mₙ of at least 146 g/mol, and
b) polyamide-forming monomers selected from lactams, ω-aminocarboxylic acids and/or equimolar combinations of diamine and dicarboxylic acid;
II. from 10 to 85 parts by weight of a polyamide;
III. from 10 to 85 parts by weight of a polyester;
where the sum of the parts by weight of I., II. and III. gives 100;
IV. a maximum of 40 parts by weight of additives selected from impact-modifying rubber and/or conventional auxiliaries or added materials.

## Revendications

1. Structure multicouche thermoplastique, contenant les couches suivantes :
I. une couche I faite d'une matière moulable thermoplastique ;
II. une couche II faite d'une autre matière moulable thermoplastique ;
et entre les deux, une couche faite d'un agent adhésif, constitué pour au moins 5 % en poids d'un copolymère greffé, réalisé à partir des monomères suivants :
a) de 0,5 à 25 % en poids (par rapport au copolymère greffé) d'une polyamine comportant au moins 4 atomes d'azote et un poids moléculaire moyen Mₙ d'au moins 146 g/mole ;
b) monomères formant des polyamides et sélectionnés parmi les lactames, les acides ω-aminocarboniques et/ou les combinaisons équimolaires de diamine et d'acide dicarbonique.

2. Structure multicouche thermoplastique selon la revendication 1,
**caractérisée en ce que**
l'une au moins des couches I et II est constituée d'une matière moulable à base de polyamide ou d'une matière moulable à base de polyamide.

3. Structure multicouche thermoplastique selon l'une des revendications précédentes,
**caractérisée en ce que**
la couche I est constituée d'une matière moulable à base de polyamide et la couche II d'une matière moulable à base de polyamide.

4. Structure multicouche thermoplastique selon l'une des revendications précédentes,
**caractérisée en ce que**
la polyamine contient au moins 8 atomes d'azote.

5. Structure multicouche thermoplastique selon l'une des revendications précédentes.
**caractérisée en ce que**
la polyamine contient au moins 11 atomes d'azote.

6. Structure multicouche thermoplastique selon l'une des revendications précédentes,
**caractérisée en ce que**
la polyamine possède un poids moléculaire moyen Mₙ d'au moins 500 g/mole.

7. Structure multicouche thermoplastique selon l'une des revendications précédentes,
**caractérisée en ce que**
la polyamine possède un poids moléculaire moyen Mₙ d'au moins 800 g/mole.

8. Structure multicouche thermoplastique selon l'une des revendications précédentes,
**caractérisée en ce que**
la concentration de groupes amino du copolymère greffé se situe dans la gamme de 100 à 2 500 mmoles/kg.

9. Structure multicouche thermoplastique selon l'une des revendications précédentes,
**caractérisée en ce que**
le copolymère greffé est réalisé en utilisant les monomères additionnels suivants :
c) Acide oligocarbonique, sélectionné parmi les substances suivantes : de 0,015 à environ 3 % molaire d'acide dicarbonique et de 0,01 à environ 1,2 % molaire d'acide tricarbonique (à chaque fois par rapport à la somme des autres monomères formant des polyamides).

10. Structure multicouche thermoplastique selon l'une des revendications 2 ou 3,
**caractérisée en ce que**
l'agent adhésif contient, outre le copolymère greffé, un polyamide et/ou un polyamide.

11. Structure multicouche thermoplastique selon l'une des revendications précédentes,
**caractérisée en ce qu'**
elle contient plus d'une couche I et/ou plus d'une couche II.

12. Structure multicouche thermoplastique selon l'une des revendications précédentes,
**caractérisée en ce que**
l'une des couches est électriquement conductrice.

13. Structure multicouche thermoplastique selon l'une des revendications 1 à 11,
**caractérisée en ce qu'**
à la couche la plus interne se rattache une couche supplémentaire, électriquement conductrice.

14. Structure multicouche thermoplastique selon l'une des revendications précédentes,
**caractérisée en ce qu'**
elle représente un tube.

15. Structure multicouche thermoplastique selon la revendication 14,
**caractérisée en ce qu'**
elle est ondulée entièrement ou dans des réglons partielles.

16. Structure multicouche thermoplastique selon l'une des revendications 14 ou 15,
**caractérisée en ce qu'**
à la couche la plus externe se rattache une couche additionnelle faite de caoutchouc.

17. Structure multicouche thermoplastique selon l'une des revendications 14 à 16,
**caractérisée en ce qu'**
elle représente une conduite de carburant, de liquide de freinage, de liquide de refroidissement, de liquide hydraulique, de station-service ou de vapeur.

18. Structure multicouche thermoplastique selon l'une des revendications 1 à 13,
**caractérisée en ce qu'**
elle représente un corps creux.

19. Structure multicouche thermoplastique selon l'une des revendications 1 à 13 ou 18,
**caractérisée en ce qu'**
elle représente un réservoir, en particulier un réservoir de carburant ou une tubulure de remplissage, en particulier une tubulure de remplissage de réservoir.

20. Structure multicouche thermoplastique selon l'une des revendications 1 à 13
**caractérisée en ce qu'**
elle représente une feuille ou une plaque multicouche.

21. Structure multicouche thermoplastique selon l'une des revendications précédentes,
**caractérisée en ce qu'**
elle est réalisée par moulage par injection de plusieurs constituants, coextrusion ou coextrusion-soufflage.

22. Matière moulable contenant les constituants suivants :
I. de 5 à 60 parties en poids d'un copolymère greffé, réalisé à partir des monomères suivants :
a) de 0,5 à 25 % en poids (par rapport au copolymère greffé) d'une polyamine comportant au moins 4 atomes d'azote et un poids moléculaire moyen Mₙ d'au moins 1,46 g/mole :
b) des monomères formant des polyamides et sélectionnés parmi les substances suivantes : lactames, acides ω-aminocarboniques et/ou combinaisons équimolaires de diamine et d'acide dicarbonique ;
II. de 10 à 85 parties de poids d'un polyamide ;
III. de 10 à 85 parties de poids d'un polyamide,
la somme des parties en poids de I, II et III étant égale à 100 ;
IV. au maximum 40 parties en poids d'additifs, sélectionnés à partir d'un caoutchouc renforçant la résilience et/ou d'adjuvants ou additifs de type usuel.
